# EUROPEAN PATENT APPLICATION

(11) **EP 4 215 280 A2**
(43) Date of publication of application: **26.07.2023**
(21) Application number: 23158311.3
(22) Date of filing: 13.11.2015
(51) Int. Cl.: B04C 5/04, B04C 5/13, B04C 5/14

(54) **SOLIDS SEPARATION, WASHING AND SAMPLING SYSTEM**

(30) Priority: 14.11.2014 GB 201420257
(62) Divisional of application: 21202936.7
(71) Applicant: DWC AS, 5200 Oslo (NO)
(72) Inventor: AREFORD, Anders, 5217 Hagavik (NO); BRUNTVEIT, Joergen, 5073 Bergen (NO); LYNGBOE, Karl Ole Daviksnes, 5216 Lepsoey (NO); MCCANN, Dominic Patrick, Hampshire SO51 9LN (GB)
(74) Representative: Jenkins, Peter David

(57) **Abstract**

An apparatus for separating solid particles from a hydrocarbon-containing fluid produced from an oil and/or gas production facility, the apparatus comprising an upstream particle separation unit for separating solid particles and fluid in a vortex chamber, the upstream particle separation unit comprising an input conduit for a fluid and particle mixture into a vortex chamber, a first collector for solid particles beneath the vortex chamber and a fluid conduit for conveying fluid away from the vortex chamber, and a downstream particle separation unit comprising a first conduit for conveying a fluidising fluid into a lower portion of the first collector, a second conduit for receiving a fluidised flow of solid particles in the fluidising fluid from the lower portion of the first collector and a particle separator for receiving the fluidised flow and separating solid particles from the fluid. A method of separating solid particles from a hydrocarbon-containing fluid produced from an oil and/or gas production facility is also disclosed.

## Description

The present invention relates to an apparatus for, and a method of, separating solid particles from a hydrocarbon-containing fluid produced from an oil and/or gas production facility. In particular the present invention relates to a system for the removal of solids, in particular sand, the washing of these solids and the application thereof, particularly in the production of oil and/or gas.

During the production of oil and gas large amounts of solids, for example, sand or chalk, can be produced. The amount and type of solids can vary from reservoir to reservoir and from well to well. It can also vary during the life of the reservoir/well. For example, as the reservoir pressure decreases during production, the stress state of the matrix rock in the reservoir changes. Such changes can result in increased stress in the matrix so that mechanical failure can occur resulting larger amounts of sand production (if it is a sandstone reservoir). The original pressure in the reservoir supported the rock formation and when this is remove through production, the matrix itself has to support the weight of the formation above and this increase in stress state results in sand production. As another examples Enhanced Oil Recovery (EOR) techniques such as water or gas injection can cause an increase in the amount of sand being swept into the production well. Whatever the mechanism the production of sand (and other materials) entrained in the oil and/or gas product stream can cause many issues for the operator (for example, Oil Company) of the reservoir. In particular, sand in the production will cause erosion in pipelines and downstream equipment. It can also result in clogging of process equipment, e.g., valves and pumps, resulting in higher maintenance costs and loss of production during this maintenance. Maintenance operations can be very costly and can have a significant impact on the efficiency and economics of the process system and reservoir. This is particularly acute in offshore environments where such operations are logistically difficult and therefore more expensive.

In addition to the adverse affects of erosion and the loss of production during maintenance, any sand must be removed from the production stream before it can be delivered and it must be disposed of in an environmentally acceptable manner. In an offshore environment it cannot be simply pumped into the sea because the sand particles themselves are coated with hydrocarbons and therefore represent a source of pollution. Either the sand is transported on shore to be treated for disposal or it needs to be cleaned to an acceptable level offshore before disposal into the sea. Today solutions for cleaning offshore are not very efficient and transportation is very costly. In some cases the separated solids particles are re-injected into another well, however, this is also a costly solution.

There are many types of particle (e.g., sand) separators presently available and most function according to the centrifugal principle where a vortex is generated in the separator so that particles are thrown against the internal wall by centrifugal forces and fall to the bottom of the vessel for collection. The produced fluids leave the vessel through an upper outlet. However, such solutions usually work at certain flow rates and have a reduced efficiency if the production rate changes. If it is too high significant erosion takes place in the vessel and at lower rates the centrifugal effect is reduced so that solids particles leave the vessel with the produced oil and/or gas. In addition, the vortex generated in the vessel can sometimes pick up the collected sand at the bottom of the vessel and drag it into the output stream. As a result of the above, often such equipment has a narrow window of production flow rate in which it will operate efficiently.

Sand washing systems are presently used but these systems generally rely of water/chemical jetting of the sand (sometimes with hot water) involving heavy pumps with repeated flushing. They have a large footprint, which can cause issues on offshore platforms - on such structures deck space and load capacity is very costly. Because their efficiencies are generally not that high, the residence time for sand particles is high (due to rewashing) and it can be difficult to get solids particles that are clean enough to meet regulation requirements for disposal at sea. In addition, the dirty water must also be treated for disposal.

The present inventors have worked to establish technical solutions to the above restrictions associated with technology presently used in the industry or disclosed in the prior art.

The present invention provides an apparatus for separating solid particles from a hydrocarbon-containing fluid produced from an oil and/or gas production facility according to claim 1; and a method of separating solid particles from a hydrocarbon-containing fluid produced from an oil and/or gas production facility according to claim 9. Preferred features are defined in the respective dependent claims.

In particular, the preferred embodiments of the present invention can provide an apparatus, which integrates the separation and cleaning of sand or chalk particles (note that through this description solids, solids particles and sand are used interchangeably as sand is the most common solids produced) from production flow in a compact system that reduces the requirement for a large footprint on an offshore platform. However, it will be appreciated by those skilled in the art that such a system has wide application both offshore and on land based oil and gas production facilities. It will also be understood that the individual element of the system can be used independently of each other, e.g., the sand separator without the washing component or with some other solids treatment system and all such combinations are anticipated.

The present invention accordingly can preferably provide apparatus and/or methods for the separation of solids/sand from oil and gas production fluids, the cleaning of said solids/sand to a level that is environmentally acceptable for disposal at sea. In addition the system provides a means to automatically collect representative solids particles samples in order to continuously evaluate the efficiency of the system.

According to a first preferred aspect of this invention there is provided a system comprising a Dynamic Solids Separator, Solids Buffer and Washing Plant and at least one Production Sample bucket.

According to a second preferred aspect of this invention the Dynamic Solids Separator comprise an upper spiral inlet channel that has an inlet cross-sectional area that is greater than the channel outlet cross-sectional area such that the velocity of the fluids exiting the spiral channel is greater than the velocity entering it.

According to a third preferred aspect the inlet of the spiral channel is of circular cross-section and the outlet is of rectangular cross-section.

According to a forth preferred aspect of this invention the spiral channel starts on a larger diameter at the inlet and ends on a smaller diameter at the outlet.

According to a fifth preferred aspect of the invention the spiral channel starts at one azimuth and ends on a second azimuth thus inducing an exit rotation to the fluid exiting the spiral channel.

According to a sixth preferred aspect of this invention there is provided a rectangular flow restrictor on the spiral channel outlet that can be used to control the exit velocity of fluids leaving the channel.

According to a seventh preferred aspect the flow restrictor is spring loaded such that when the pressure drop across the spiral channel reduces due to a reduce flow rate of fluid entering the channel, the flow restrictor closes slightly to further restrict the flow and thus increase the fluid exit velocity.

According to a eighth preferred aspect of this invention the flow restrictor is mechanically operated by, for example, manual movement or by a hydraulic or electrically actuation system. The actuator being controlled to maintain, or achieve a certain pressure drop across the spiral channel, or to maintain/obtain a certain exit fluid velocity.

According to a ninth preferred aspect the upper spiral inlet section and flow restrictor are fabricated from wear resistant material or is internally coated with a wear resistant material such as Tungsten Carbide, Ceramic, Rubber etc.

According to an tenth preferred aspect of this invention the upper spiral section inlet section is fabricate using a HIPing process employing specialist wear resistant material or alloys that have been formulated to provide high wear resistance.

According to a eleventh preferred aspect there is an exit pipe leaving through the top of the upper section through which produced fluids (cleaned of solids) will exit the Dynamic Solids Separator.

According to a twelfth preferred aspect of this invention the Dynamic Solids Separator has a lower section that comprises an inverted conical element where the diameter reduces as the distance from the top increases and is connected to a cylindrical lower pipe from which separated solids particles are collected.

According to a thirteenth preferred aspect of this invention there is a method of controlling the aperture created by the flow restrictor that comprise the steps:
1) Ramp the flow rate from the well to the desired production rate.
2) Determine the amount of sand exiting the top of the Dynamic Solids Separator entrained in the cleaned fluids and the amount of sand exiting the bottom of the Dynamic Solids Separator, that is, separated solids.
3) Adjust the position of the flow restrictor according to other aspects of this invention to change the pressure drop and velocity across the spiral channel

Repeat steps 2 and 3 until the sand exiting the top of the Dynamic Solids Separator is minimised and/or the amount of separated sand leaving the bottom is maximised

According to a fourteenth preferred aspect the mid and lower sections of the Dynamic Solids Separator are straddled internally by a conical element that acts as a particle diffuser and vortex stopper.

According to a fifteenth preferred aspect of this invention the distance between the apex of the conical particle diffuser and the bottom of the cylindrical produced fluids exit pipe is between 0.5 and 1.5 times the diameter of the exit pipe. Preferably it is 1.0 times the diameter of the exit pipe.

According to a sixteenth preferred aspect of this invention the separated particles collection pipe at the lower end of the Dynamic Solids Separator enters a solids collection bucket though a hole in the top of the said bucket. The pipe and hole being loosely sealed to prevent particle leaving the bucket but which is not pressure tight and allows relative movement between the pipe and the solids collection bucket.

According to a seventeenth preferred aspect of this invention the solids collection bucket is mounted on a weight load-cell that measures the downward force on the bucket. There is also provided a pressure sensor that measures the internal pressure in the Dynamic Solids Separator.

According to an eighteenth preferred aspect of this invention the outputs from the weight load-cell and the pressure sensor are connected to a controller which compensates the weight load-cell measurements for variations in the internal pressure in order to provide an accurate measurement of the weight of the solids particles collected in the solids collection bucket. The controller is connected to a display/monitor that provides a continuous reading of the weight of solids in the collection bucket.

According to a nineteenth preferred aspect of this invention there is provided a solids particles flushing component that comprises a lower annular pipe that has an inner collection pipe. The lower annular pipe is connected to the outside of the solids collection bucket and through the wall of the Dynamic Solids Separator wall to a water supply. The inner collection pipe is connected to the outside of the solids collection bucket through the wall of the Dynamic Solids Separator to the Solids Buffer and Washing Plant. The pipes through the annulus between the solids collection bucket and wall of the Dynamic Solids Separator allow relative movement between the two.

According to a twentieth preferred aspect of this invention the weight of solids collected in the solids collection bucket is used to trigger the flushing of the collected solids by pumping water through the lower annular pipe, which fluidises the solids particles in the solids particle collection bucket so that a mix of water and solids particles are pumped through the inner solids collection pipe. Once the weight of solids particles in the solids particle collection bucket is reduced the flushing pump is switch off. Such flushing events can be controlled automatically or manually.

According to a twenty-first preferred aspect of this invention, the Solids Buffer and Wash Plant comprises a low-pressure particle separator, an oil/water separator and a Sand Tank with a flushing system.

According to a twenty-second preferred aspect the separated solids particles and water mix exiting the Dynamic Solids Separator represent an input stream into the second particle separator, which operates in the same manner as the Dynamic Solids Separator, where the sand removed from the input is collected in the Sand Tank and the oil stripped off the sand particles, while scratching cyclonic inner wall along with the water in the input stream, exit through the top of the low-pressure particle separator.

According to a twenty-third preferred aspect of this invention the oil/water mix exiting the low-pressure particle separator is an input stream to the oil/water separator. The oil removed is thus drained from the system and the water can be re-circulated to the Sand Tank flushing system.

According to a twenty-fourth preferred aspect of this invention the Sand Tank is instrumented with a load-cell and pressure sensor to obtain the weight of sand particles collected in the tank is a similar manner as described in other aspects of this invention.

It should be noted that the Sand Tank is generally much larger (e.g.., 10 times) than the solids collection bucket in the Dynamic Solids Separator.

According to a twenty-fifth preferred aspect of this invention the Sand Tank is equipped with the same type of solids particles flushing system as is used in the solids collection bucket in the Dynamic Solids Separator. In addition, the particle flushing system can be automatically turn on or off by the weight sensor controller. Also, recycled water as described in other aspects and/or freshwater can be used for the flushing system.

According to a twenty-sixth preferred aspect the cleaned sand particles and water exiting the Solids Buffer and Wash Plant flushing system can either be pumped into the platform well re-injection system or directly into the sea or can be injected back into the low-pressure particle separator to be re-circulated and thus additionally cleaned by the Solids Buffer and Wash Plant.

According to a twenty-seventh preferred aspect of this invention there is provided one or more Production Sample Weight Bucket(s) that can take samples from the Solids Buffer and Wash Plant flushing system and comprise; a sample bucket, a load-cell, a pressure sensor, a controller and a sample bucket flushing system as described in other aspects of this invention.

According to a twenty-eighth preferred aspect of this invention there is provided a method of solid particles separation and cleaning thereof that comprises several process cycles;
1) Production fluids are passed through a 1^{st} Dynamic Solids Separator (DSS)
2) When the particles collected in the solids collection bucket of the 1^{st} DSS have reach a certain amount, the production fluids are switched to flow through a 2^{nd} and parallel DSS. At the same time, the particles collected in the 1^{st} DSS are flushed into the Solids Buffer and Wash Plant.
3) When the particles collected in the solids collection bucket of the 2^{nd} DSS reach a certain amount, production fluids are directed back to the 1^{st} DSS and the solids collected in the 2^{nd} DSS are flushed into the Solids Buffer and Wash Plant. Steps 1 through 3 are continuously repeated.
4) While production is flowing through either the 1^{st} or 2^{nd} DSS, solids particles collected are recycled through the Solids Buffer and Washing Plant until samples collected in a Production Sample Bucket and analysed (using methods known to those skilled in the art) indicate that they are sufficiently cleaned of oil to be disposed in an environmentally safe manner. Once this is the case, solids in the Sand Tank may be flushed out of the Solids Buffer and Washing Plant.

In a twenty-ninth preferred aspect of this invention, real-time weights of solids particles collected measured by the Dynamic Solids Separator and/or by the Solids Buffer and Washing Plant and/or by a Production Sample Weight Bucket are recorded, stored and analysed to provide information relating to the changes in reservoir production behaviour as a result of continued extraction of oil and gas. As an example, increases in sand production can be a precursor to the production of water and it may be beneficial to choke back the production rate from a particular well (or zone) when this is detected in order to increase the overall production from the reservoir. This can have a significant impact on the value of the reservoir.

Hereinafter, the present invention will now be described in more detail with reference to the accompanying figures, in which exemplary embodiments of the invention are shown.
Figure 1 shows a schematic illustration of a solids particles separation and washing system according to one embodiment of the present invention.
Figures 2, 3 and 4 show schematic illustrations of a dynamic solid separator in the system of Figure 1.
Figure 5 shows a schematic illustration of an oil separator in the system of Figure 1.
Figure 6 shows a schematic illustration of a production sampling and weight bucket in the system of Figure 1.
Figure 7 schematically illustrates the system of Figure 1 in a flushing circuit mode.
Figure 8 schematically illustrates the system of Figure 1 in a solids washing mode.
Figure 9 schematically illustrates the system of Figure 1 in flushing cleaned solids mode.

The invention may, however, be embodied in many different forms and should not be construed as being limited to the embodiments set forth herein; rather, these embodiments are provided so that this disclosure will be thorough and complete, and will fully convey the concept of the invention to those skilled in the art.

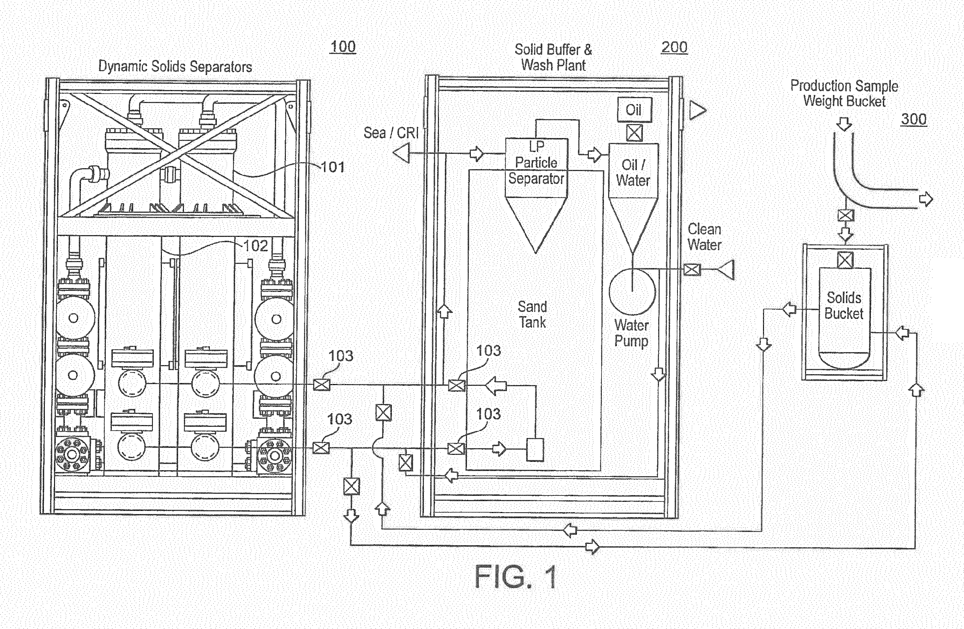

Referring to figure 1 there is shown a schematic of a solids particles separation and washing system. The key elements of the system are; the Dynamic Solid Separators, 100, where two are shown 101 and 102, the Solids Buffer and Wash Plant, 200 and one Production Sample Weight Bucket, 300. It should be noted that the system could have more than one Production Sample Weight Bucket(s).

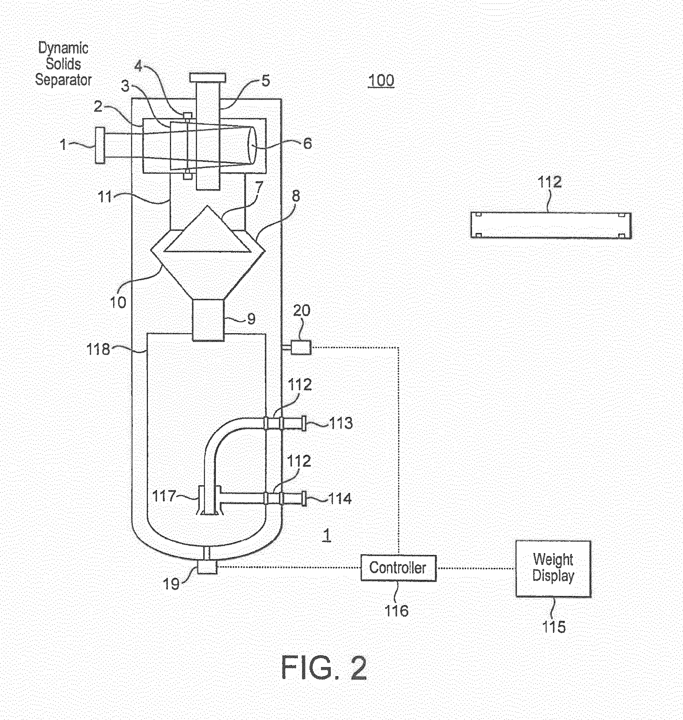

Figures 2, 3 and 4 show schematics of one of the Dynamic Solids Separators.

In figure 2 the main components of the separator are shown and can be conveniently broken down into an upper, mid and lower section. The upper section with labels 1 through 6 represent the dynamic cyclone part of the separator. The mid section labelled 7 through 11 represents the particle diffusion and cleaned product outlet, 5. Finally the lower section labelled 412 through 418 illustrates the solids collection and flushing components.

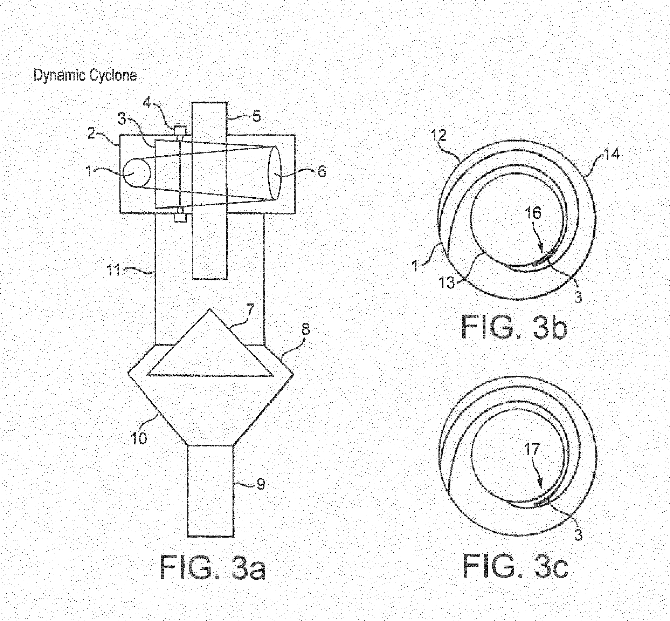

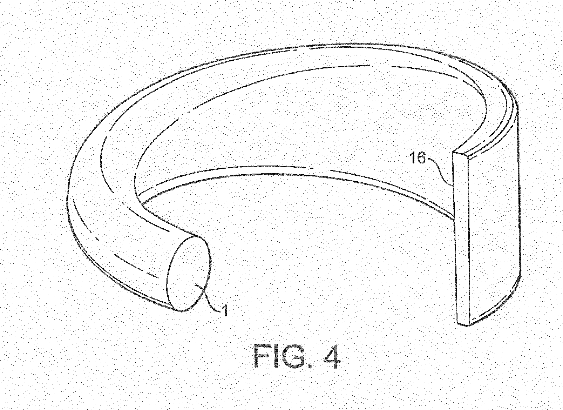

In figure 3 in shown a more detailed illustration of the dynamic cyclone or upper section of a separator. The flow from an oil or gas well enters the separator through the inlet labelled 1. This inlet is generally circular and the start of a spiralled channel section that accelerates the flow velocity as the cross-sectional area of the channel is reducing along its length. A perspective view of the channel is shown in figure 4. In this embodiment, the channel inlet has a circular cross-section and the channel exit is rectangular. The area of the rectangular exit is -25% less than the area of the circular inlet giving rise to a flow velocity acceleration. In addition to accelerating the fluid through the channel, it is also designed to impart a rotational or circular motion to the fluid flow as it exits the spiral channel. This is achieved by arranging that the inlet 1 is at one azimuth and the channel exit 16, shown on figure 3b, is on a different azimuth with the rotation from 1 to 16 being between 235 to 270 degrees. This can also be seen in figure 4. In addition to the change in azimuth, it will also be appreciated from figure 3b and 3c that the inlet is on a large diameter, 12 than the exit, which at the lower diameter labelled 13. This arrangement provides additional flow acceleration and rotation. It will be appreciated by those skilled in the art that the reduction in channel cross-section area and the change from a circular inlet to a rectangular outlet, can take many different forms. With the primary objectives to accelerate and rotate the flow entering the dynamic cyclone section.

In figures 3a, 3b and 3c there is shown a flow restrictor component labelled 3. This component can be used to reduce the spiral channel exit cross-section area even further. There is provided a controlling mechanism 4 for this purpose. The component 4 can be spring loaded so that the exit area adjusts automatically in response to the pressure drop across the spiral channel. For example, as the flow velocity in the channel reduces due to, for example, lower production rates from the well, the pressure drop in the channel reduces and the spring-loaded restrictor closes a bit in order to reduce the channel exit area, increase the pressure drop at the channel exit and thus increase (or maintain) the velocity of the fluids exiting the channel. This is illustrated in figure 3c where reduction in pressure drop across the channel causes a change in spring force, 17, resulting in the restrictor reducing the channel exit cross-sectional area. The spring coefficient can be predetermined to provide a response over a defined range of pressure drops. This component creates a dynamic velocity regulating function that leads to significant improvements over solutions in the prior art. In other embodiments, the regulator 4 can be an adjustment screw that can be accessed from outside the unit and which can be manually rotated to increase or decrease the exit cross-sectional area. In other embodiments, 4 can be adjusted using electric or hydraulic actuation systems (not shown) that are linked to measurements that provide the pressure drop across the spiral channel or the flow exit velocity. As the pressure drop increases or decreases the flow restrictor 3 is automatically opened or closed to regulate the pressure drop and thus the exit flow velocity from the spiral channel. Those skilled in the art will be familiar with measurements and actuator systems commonly used for this type of regulator.

Fluids exiting the spiral channel enter the top section of the particles separator at 16. The fluid is rotating rapidly and as a result particles in the fluid are thrown outwards by the centrifugal forces on the particles and become separated from the fluid flow. This is a function of particle size and large particles will experience larger forces than smaller one. The phenomenon is well understood and used in commercial Hydrocyclones, see http://www.energy.siemens.com/hq/en/industries-utilities/oil-gas/portfolio/water-solutions/hydrocyclones.htm. However, the dynamic velocity adjustment mechanism is designed to ensure correct pressure drop and flow velocity so even very fine particles are separated. A vortex is created in the unit with fluids rotating in the section 11 flowing downwards into the unit where it is disrupted by the particle diffuser, 7. As the fluids continue to rotating in the mid section 11 further solids particles separation takes place and the cleaned fluids exit the unit through the pipe 5. The separated particles drop out of the flow as their velocity is reduced while rotating close to inside wall, 13, of top section and the inside wall of the section 11. These particles drop and are dragged into the area between the particle diffuser, 7, and the lower section of the separator labelled 8. The diameter of the diffuser at its bottom is great that the internal diameter of 11. This ensures that the vortex is arrested and does not extend down into the area below the particle diffuser where if could pickup separated particles and drag them back up to the exit-pipe 5. The wall of 8 is expanding outwards so that the diameter of the chamber increases as the chamber progresses downwards as shown in figure 3a. However, the bottom of the chamber, 10, has an inverted conical shape so that the falling particles are collected and fall out of the unit through the pipe labelled 9. In this embodiment the cleaned fluid exit-pipe 5 has a diameters that is ¼ that of section labelled 11. Also, the tip of the particle diffuser, 7, is 1 diameter of the exit-pipe 5, below the bottom of the exit-pipe. While these dimension are found to provide favourable results other configurations with differing dimensions are possible.

As described in this disclosure, there is provided a spiral flow channel equipped with a flow restrictor that can regulate the velocity of the fluid exiting the spiral channel in order to optimise the solids particles separation in the unit. This flow restrictor can be controlled through manual intervention or by use of an automatic monitoring system. A method is here disclosed whereby the ratio of the mass of solids particles exiting with the cleaned fluid through exit-pipe 5, and the mass of solids particles exiting through the collection pipe, 9 is used to adjust the flow restrictor so that this ratio is minimised. The process steps are;
1) Ramp the flow from the producing well into the separator unit to its operating level.
2) After a period of stable flow, a determination of the solids particles exit ratio as defined above is made. The mass of particles exiting 5 and 9 can be obtained using Production Sample Weight Buckets as described in this invention or they could be estimated using specific particle sensors, e.g., see www.clampon.no.
3) If it is assessed that the solids particles exit through the cleaned fluid outlet 5, is too high then the flow restrictor is adjusted to increase the fluid exit velocity from the spiral channel. This can be done manually or it could be automated as described in this invention.
4) Repeat steps 2 and 3 until the solids particles exiting 5 has been minimised and most are leaving through the collection pipe 9.

Once the particles have been collected and exit the dynamic cyclone through collection pipe 9, they fall into the solids collection bucket labelled 418 in figure 2. The collection pipe 9 enters the collection bucket through a hole in the top of bucket 418, which is sealed to prevent particles exiting between collection pipe 9 and collection bucket 418 but allows some differential movement between the collection bucket 418 and the collection pipe 9. For example, an elastomer grommet could be used. During operation of the solids separator, 100, the solids collection bucket 418 will continue to fill with particles. The collection bucket, 418, is placed on a load-cell, 19, which measure the downward force on the bucket. Changes in this force is the result of two components; the changing weight of solids in the bucket and variations in the internal pressure in the unit. In order to correct for the variations in pressure a separate pressure sensor, 20, is provided. The outputs from both the load-cell 19 and the pressure sensor 20 are fed into a controller 416. This computes the weight of the solids particles separated by the system and collected in the solids collection bucket. There is also provided a real-time display connected to the controller showing the weight of solids particles collected in the bucket. It should be noted that the controller can also be connected to other computers or recording devices (not shown) to allow for real-time analysis and storage of the data and analysis. In particular, the controller can also be connected to pumps used in the flushing system that are triggered when the weight of collected solids particles reaches some threshold. When is occurs, the flow from the well is switch to flow through the second Dynamic Solids Separator and flushing of the collected solids particles in the collection bucket can take place.

The flushing system comprises a water inlet 414, an annular fluidiser 417 and a water/solids outlet 413. The inlet 414, and outlet 413 are connected through annular gap between the wall of the Dynamic Solids Separator and the solids collection bucket using a section of pipe 412. These sections of pipe have `O' rings at each end and are slightly rounded at each end so that they allow relative movement between the sample collection bucket 418, and the solids separator body. This provides that the sample collection bucket 418 is coupled to a solids removal pipe 413 by a first flexible connector, such as an O-ring and to a liquid flushing pipe 414 by a second flexible connector, such as an O-ring. That is the bucket can move slightly as the weight of collected solids particles varies, as more solids are collected and as solids particles are flushed from the unit. Water injected into inlet 414 enters the annular fluidisation component. This component comprises downward jets that fluidises the solids particles and forces the resulting mixture of water and solids particles up through the central collection pipe 413 as the pressure in the bucket increases. Generally a mixture of 50/50 water and solids particles is flushed from the solids collection bucket. As collected solids particles are flushed from the collection bucket, the weight of solids as provided by the controller decreases. Once most of the collected particles have been flushed from the unit, the flushing pumps are switched off and fluid from the well can be directed into the dynamic cyclone once more. The solids particles flushed from the Dynamic Solids Separator represent the input flow to the Solids Buffer and Washing Plant as shown in figure 1 and by appropriate arrangement of the valves labelled 103. It should be noted that all of the valves shown through this invention can be operated manually or can be operated through an appropriate control system that will be appreciated by those skilled in the art and which is not shown.

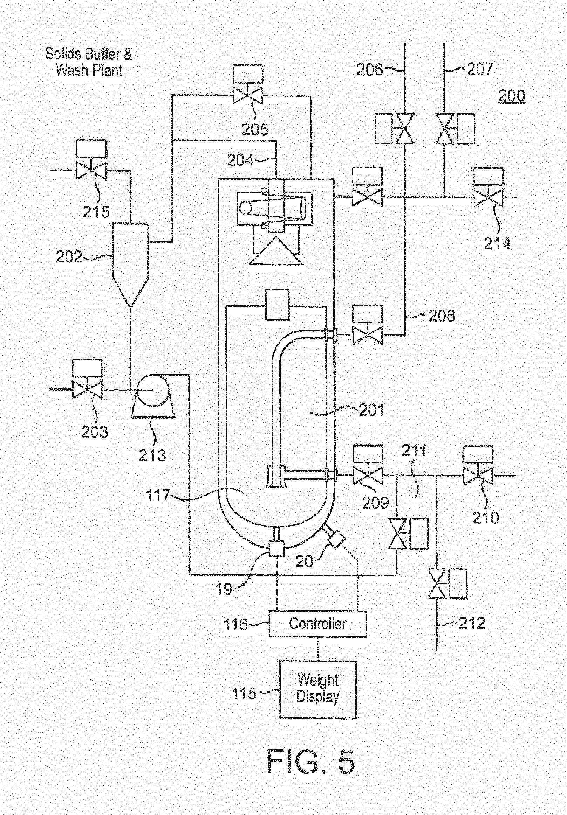

The operation of the Solids Buffer and Washing Plant will now be described with reference to figure 5. As is shown in figure 5, the plant has a solids particles separator unit and collection system, 201, which comprise the same components as the Dynamic Solids Separator as previous details in this invention. The key difference is that this unit functions at a low-pressure while the Dynamic Solids Separators operate at the higher well production pressure. Also, the Sand Tank in the wash plant is significantly larger than the solids collection bucket in the solids separators. Generally it is ~10 times larger so that many cycles of flushing from the Dynamic Solids Separators can be buffered and treated at any one time. However, the operation of the component 201 is that same as the Dynamic Solids Separators already described, including its flushing fluidization component, 417, and solids buffer collector bucket weight measurement elements, that is, components; 19, 20, 415 and 416, that function in the same way.

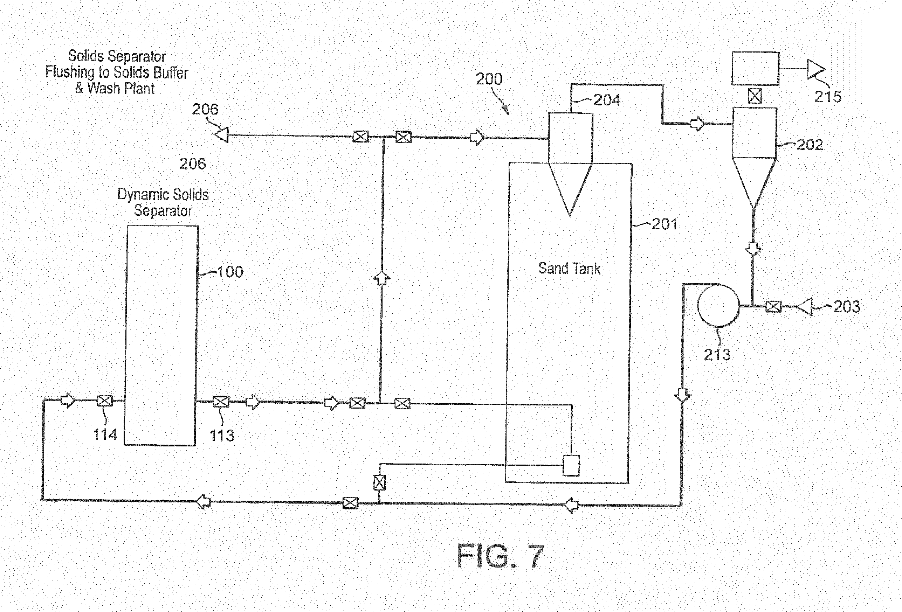

In figure 5 there is shown an oil separator, 202, that can be a cyclone or filter/absorption type or any other method that is known to those skilled in the art. In figure 5 it is shown as a cyclone, which is the preferred embodiment. There is also a water circulation pump, 213, provided along with numerous valves that can be configured to achieve a desired flow circuit and these will be described using figure 7 to figure 9. It will be noted that the circulation pump 213 is place downstream of the solids separation and cleaning components, which reduces the wear on this pump because it has clean fluids passing through it. In each of these figures, the flow-paths are shown with arrows on the pipelines. It should be noted that the component label numbers in these figures are the same as those used in figures 2 and 5.

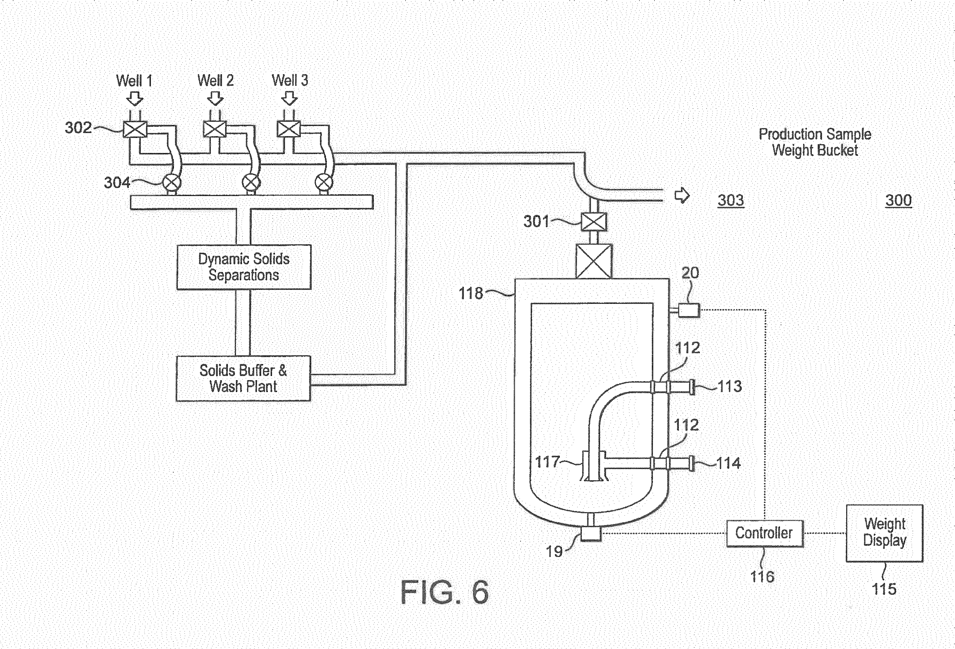

In Figure 6 is shown a Production Sampling and Weight Bucket (PSWB) installed to allow solids samples to be taken from the production flow 303. Production is flowing from a number of wells, in Figure 6, three wells are shown but this can be any number depending on the oil and gas field configuration. Each well has valves labelled 302 and 304 that can be operated manually or automatically controlled by a computerised process system, not shown, to either direct flow directly to the production flow stream 303 or through the Dynamic Solids Separators and Solids Buffer and Wash Plant. The Production Sample Weight Bucket is 'T' off the production flow manifold where the valve 301 controls flow into the Production Sample Weight Bucket. The PSWB can be arrange to collect samples continuously or periodically are required. Its operation is exactly as described above for the solids collection bucket 418, shown in figure 2 and the collection of solids in the sand tank 201, shown in figure 5. Once the sample bucket is full as determined by the controller 416 and as described in other embodiments of this invention, valve 301 is closed and the bucket is flushed into the Solids Buffer and Wash Plant as described elsewhere. During sample collecting the rate at which sand is collected in the PSWB is recorded by the controller 416 and is used to provide an indication that the sand content of the production flow is increasing. If excessive sand production is occurring it is possible selectively to shut each well one at a time (or in groups) in order to identify which well (or group of wells) is producing more sand. The production from this well (or group of wells) can then be selectively routed through the Dynamic Solids Separator, that is, through the inlet labelled 1 in Figure 2 and then through the Solids Buffer and Wash plant as described elsewhere. The manifolds and piping required to make this happen are shown schematically in figure 6 but will depend on the platform configuration. The system shown in Figure 6 allows the automation of the solids separation unit and the solids buffer and wash plant providing a more efficient production platform. The system in figure 6 could equally be operated manually using readings recorded and shown in real-time on the display 415.

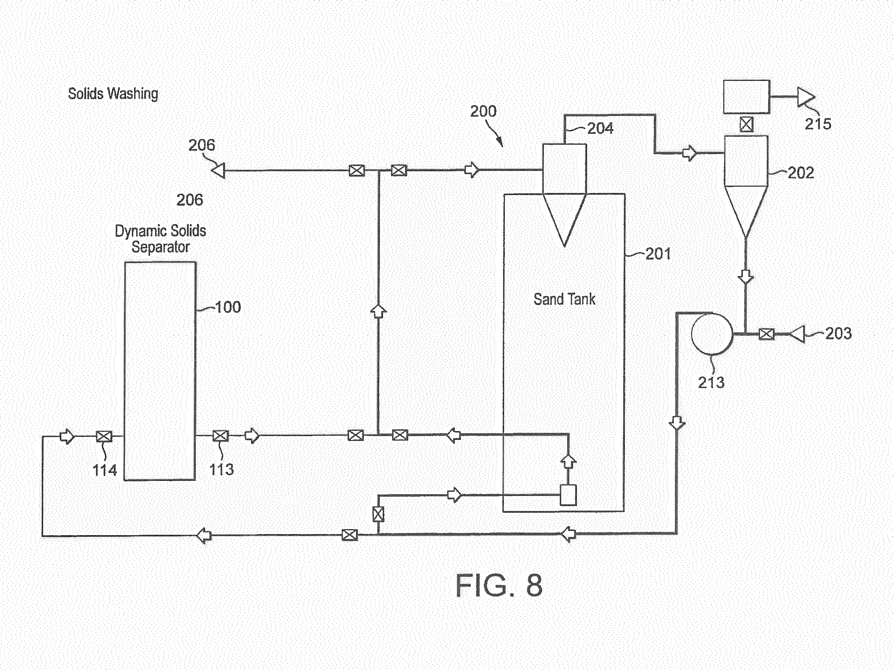

Figure 7 illustrates the flushing circuit where solids separated in the solids separated collection bucket 418 are removed from the Dynamic Solids Separator to the Solids Buffer and Wash Plant 200. In figure 7 the particular solids separator that is being flushed is no longer receiving fluids from a well, as described previously, and fresh water is pumped from the inlet 203 using pump 213 into the fluidiser in the sample separator 100, through the inlet 414. Solids and water leaving the solids collection bucket through exit 413 are circulated into the Solids Buffer and Wash Plant 200 as shown in figure 7. As the solids flow through the solids particle separator 201 and are cleaned through the centrifugal process (as described in other embodiments of this invention), oil and water collected will exit from 204 in figures 5, 7, 8 and 9. The cleaned solids will drop into the sand tank in the solids buffer and wash plant 201. The oil/water mix exits through 204 and enters the oil separator 202. The separated oil from this component exits into the 'dirty collection tank' (not shown) through 215. From there it will be disposed of by the usual environmentally acceptable manner or may enter the produced oil stream from the well. The separated water from 202 exits to be circulated using pump 213 back to the inlet 414 on the sample separator fluidisation flushing system and exits with solids through outlet 413. This circulation continues until the Dynamic Solids Separator solids collection bucket has been emptied. Once this has occurred, the Dynamic Solids Separator can be put back on-line to accept fluids from the well and the Solids Buffer and Wash Plant switches into a solids washing mode as shown in figure 8.

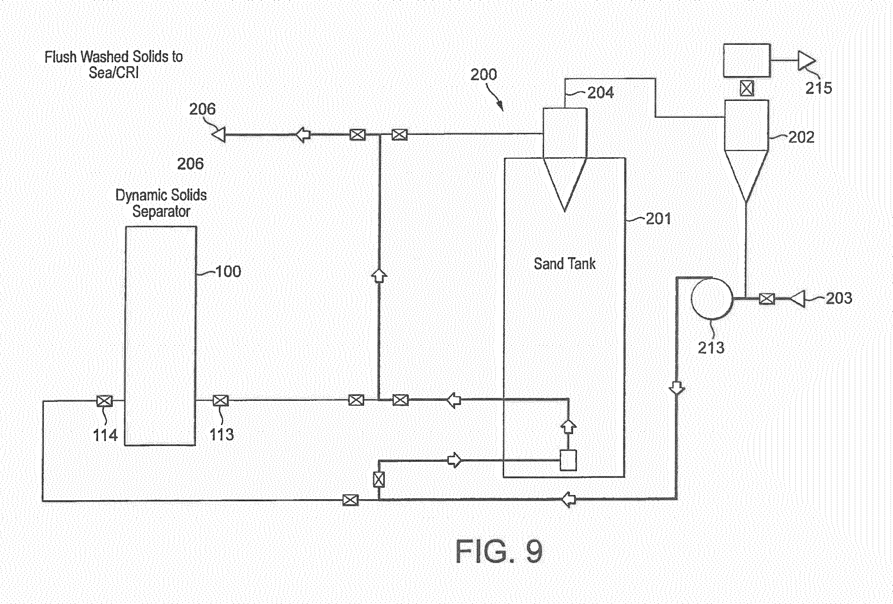

In figure 8 the appropriate valves are opened/closed in order to continually circulate the collected solids from the dynamic solids separator, 100, through the solids buffer and wash plant. It will be appreciated by those skilled in the art, that the valves and pumps used through the system can be operated manually or can controlled using an automated system (not shown). During this process fresh water and/or washing chemicals enter the circuit when required through 203. The solids and water/chemicals continually circulate through the system as shown in figure 8. On each cycle through the system, the solids are cleaned to a greater extent until such point that they carry minimal amounts of oil and are judge to be sufficiently clean to be disposed of by pumping them into the sea. This occurs using the circuit defined in figure 9. In order to analyse the cleanliness of the solids particles, sample can be collected at any time using the Production Sample Weight Bucket as shown in figure 1, 300, and detailed in figure 6. It would also be possible to use a multiphase flow meter to measure the oil/water ration of the flow leaving 204 and when the oil content is below a certain amount then further cleaning is not necessary. In addition, the MPFM can be utilised on any flow line within the system to determine the rates of any of the different phase (Oil, Gas, Water and Solids) within the flow and to further use this information to control the different steps in the process, e.g., adjust the inlet flow velocity to optimise the process.

Figure 9 shows the flow circuit to flush the cleaned solids from the sand tank in the Solids Buffer and Washing Plant. In this case, fresh or seawater enters through 203 and is pumped through the fluidisation flushing system in 201 using pump 213. The water and cleaned solids particles mix exits the flushing system and is pumped into the sea through 206 or into a cleaned solids collection tank (not shown) as shown in figure 9. Flushing continues until most of the cleaned solids particles have been removed from the sand tank as indicated by the solids weight system; 19, 20, 415 and 416, as shown in figure 5. Once this is complete, the flow circuit on the Solids Buffer and Washing Plant can be change to another mode, for example, to flush more separated particles from a Dynamic Solids Separator solids collection bucket into the solids.

Using the apparatus described in this invention, fluids flowing from an oil well or group of oil wells, can have the solids removed. In addition, the solids separated can be cleaned of oil to a degree that allows for cost effective disposal of such particles. It also allow the oil remove for the said solids particles to be collected for potential feeding into the production stream thus extract as much usual production as possible. Such a system provides significant advantages over present day practice and the prior art.

Various aspects of the present invention are disclosed in the following clauses:
1. An apparatus for separating solid particles from a hydrocarbon-containing fluid produced from an oil and/or gas production facility, the apparatus comprising a spiral channel having an inlet and an outlet, a cross-sectional area of the inlet being larger than a cross-sectional area of the outlet, a vortex chamber beneath the channel for receiving a spiral flow from the channel, a first collector for solid particles beneath the vortex chamber and a fluid conduit for conveying fluid away from the vortex chamber.
2. An apparatus according to clause 1 wherein the spiral channel has an axis and the inlet is further from the axis than the outlet.
3. An apparatus according to clause 1 or clause 2 wherein the spiral channel is adapted to change a shape of the cross-sectional area of the fluid exiting the outlet as compared to a shape of the cross-sectional area of the fluid entering the inlet.
4. An apparatus according to clause 3 wherein the inlet has a substantially rounded cross-section and the outlet has a substantially polygonal cross-section.
5. An apparatus according to clause 4 wherein the inlet has a circular cross-section and the outlet has a rectangular cross-section.
6. An apparatus according to any foregoing clause wherein the outlet has a cross-sectional area from 10 to 40%, optionally from 20 to 30%, further optionally about 25%, less than the cross-sectional area of the inlet.
7. An apparatus according to any foregoing clause wherein the spiral channel extends over a rotational angle of from 200 to 300 degrees, optionally from 235 to 270 degrees.
8. An apparatus according to any foregoing clause wherein the spiral channel is adapted to induce a spiral flow in the fluid exiting the outlet.
9. An apparatus according to any foregoing clause wherein the spiral channel is adapted to increase the velocity of the fluid exiting the outlet as compared to a velocity of the fluid entering the inlet.
10. An apparatus according to any foregoing clause further comprising a flow restrictor located at the outlet for controlling an outlet velocity of the fluid.
11. An apparatus according to clause 10 wherein the flow restrictor is biased to provide control of the outlet velocity of the fluid and/or to control a fluid pressure at the outlet dependent upon fluid pressure acting on the flow restrictor.
12. An apparatus according to clause 11 wherein the bias of the flow restrictor is adapted automatically to control the outlet velocity of the fluid within a desired range.
13. An apparatus according to clause 10 or clause 11 further comprising an actuator for controlling the position of the flow restrictor thereby to control the outlet velocity of the fluid within a desired range.
14. An apparatus according to any foregoing clause wherein the fluid conduit extends upwardly out of the vortex chamber.
15. An apparatus according to clause 14 wherein the fluid conduit has a width which is from 10 to 40%, optionally from 20 to 30%, further optionally about 25%, of a width of the vortex chamber.
16. An apparatus according to any foregoing clause further comprising a conical element at a lower end of the vortex chamber, the conical element having an upper tip, a lower edge, and a conical surface progressively increasing in radius in a direction extending from the tip to the lower edge, the lower edge being received in a diffuser pipe extending downwardly from the vortex chamber towards the first collector.
17. An apparatus according to clause 16 wherein the lower edge has a larger diameter than a width of the vortex chamber and in the vicinity of the lower edge the diffuser pipe has a larger width than the diameter of the lower edge to provide an annular flow path for solid particles downwardly past the conical element from the vortex chamber towards the first collector.
18. An apparatus according to clause 16 or clause 17 wherein a distance between the upper tip and a lower end of the fluid conduit is from 0.5 to 1.5 times, optionally about 1 times, a width of the fluid conduit.
19. An apparatus according to any one of clauses 16 to 18 wherein the first collector is a bucket and a pipe element extends from the diffuser pipe into the bucket through a hole at a top of the bucket.
20. An apparatus according to any foregoing clause further comprising a weighing device for weighing an amount of solid particles collected in the first collector.
21. An apparatus according to clause 20 further comprising a pressure sensor for measuring internal fluid pressure in the vicinity of the first collector and a controller for compensating the weight measured by the weighing device based on variations in the internal fluid pressure measured by the pressure sensor.
22. An apparatus according to clause 20 or clause 21 wherein the first collector is supported by, or selectively engageable by, the weighing device so as to have substantially unrestricted vertical movement when supported by or engaged by the on the weighing device.
23. An apparatus according to clause 22 wherein the first collector is coupled to a solids removal pipe by a first flexible connector.
24. An apparatus according to clause 23 wherein the first collector is coupled to a liquid flushing pipe by a second flexible connector.
25. An apparatus according to any foregoing clause further comprising a solids washing unit connected to the collector, the washing unit comprising a first conduit for conveying a fluidising fluid into a lower portion of the first collector, a second conduit for receiving a fluidised flow of solid particles in the fluidised fluid from the lower portion of the first collector, a particle separator for receiving the fluidised flow and separating solid particles from the fluid, and a second collector for receiving the solid particles from the particle separator.
26. An apparatus according to clause 25 further comprising a fluid cleaner connected to the particle separator for cleaning fluid separated by the particle separator.
27. An apparatus according to clause 26 wherein the fluid cleaner comprises at least one of a centrifugal separator, a filter, an absorber or any combination thereof for separating oil and an aqueous fluid.
28. An apparatus according to clause 26 or clause 27 further comprising a return conduit for selectively connecting a water outlet of the fluid cleaner to the first collector or the second collector.
29. An apparatus according to any one of clauses 25 to 28 further comprising a pump which is located downstream, in the direction of fluid flow, from an outlet of the particle separator.
30. An apparatus according to any one of clauses 25 to 29 wherein the apparatus comprises a plurality of separation units, each separation unit comprising the spiral channel, the vortex chamber, the first collector and the fluid conduit, and the solids washing unit is connected to the plurality of separation units and adapted to receive solid particles from the respective first collectors simultaneously or sequentially.
31. An apparatus for separating solid particles from a hydrocarbon-containing fluid produced from an oil and/or gas production facility, the apparatus comprising an upstream particle separation unit for separating solid particles and fluid in a vortex chamber, the upstream particle separation unit comprising an input conduit for a fluid and particle mixture into a vortex chamber, a first collector for solid particles beneath the vortex chamber and a fluid conduit for conveying fluid away from the vortex chamber, and a downstream particle separation unit comprising a first conduit for conveying a fluidising fluid into a lower portion of the first collector, a second conduit for receiving a fluidised flow of solid particles in the fluidising fluid from the lower portion of the first collector, a particle separator for receiving the fluidised flow and separating solid particles from the fluid, and a second collector for receiving the solid particles from the particle separator, wherein the upstream particle separation unit is adapted to separate a fluid and particle mixture at a higher pressure than a pressure of the fluidised flow separated by the downstream particle separation unit.
32. An apparatus according to clause 31 further comprising a fluid cleaner connected to the particle separator for cleaning fluid separated by the particle separator.
33. An apparatus according to clause 32 wherein the fluid cleaner comprises at least one of a centrifugal separator, a filter, an absorber or any combination thereof for separating oil and an aqueous fluid.
34. An apparatus according to clause 32 or clause 33 further comprising a return conduit for selectively connecting a water outlet of the fluid cleaner to the first collector or the second collector.
35. An apparatus according to clause 34 wherein the return conduit is configured to provide the fluidising fluid in the first collector.
36. An apparatus according to clause 34 or clause 35 wherein the return conduit is configured to provide a washing fluid to the second collector to wash the solids in the second collector in a recycling step, the water flowing solids in the second collector back to the particle separator.
37. An apparatus according to any one of clauses 34 to 36 wherein the return conduit is configured to provide a flushing fluid to the second collector to flush the solids out of the second collector in a solids disposal step, the water flowing solids in the second collector to a disposal site remote from the particle separator.
38. An apparatus according to any one of clauses 31 to 37 further comprising a pump which is located downstream, in the direction of fluid flow, from an outlet of the particle separator.
39. An apparatus according to any one of clauses 31 to 38 wherein the apparatus comprises a plurality of upstream particle separation units and the downstream particle separation unit is connected to the plurality of upstream particle separation units and adapted to receive solid particles from the respective first collectors simultaneously or sequentially.
40. An apparatus according to any one of clauses 31 to 39 wherein the input conduit comprises a spiral channel having an inlet and an outlet, a cross-sectional area of the inlet being larger than a cross-sectional area of the outlet, the vortex chamber being located beneath the channel for receiving a spiral flow from the channel.
41. An apparatus according to clause 40 wherein the spiral channel has an axis and the inlet is further from the axis than the outlet.
42. An apparatus according to clause 40 or clause 41 wherein the spiral channel is adapted to change a shape of the cross-sectional area of the fluid exiting the outlet as compared to a shape of the cross-sectional area of the fluid entering the inlet.
43. An apparatus according to clause 42 wherein the inlet has a substantially rounded cross-section and the outlet has a substantially polygonal cross-section.
44. An apparatus according to clause 43 wherein the inlet has a circular cross-section and the outlet has a rectangular cross-section.
45. An apparatus according to any one of clauses 40 to 44 wherein the outlet has a cross-sectional area from 10 to 40%, optionally from 20 to 30%, further optionally about 25%, less than the cross-sectional area of the inlet.
46. An apparatus according to any one of clauses 40 to 45 wherein the spiral channel extends over a rotational angle of from 200 to 300 degrees, optionally from 235 to 270 degrees.
47. An apparatus according to any one of clauses 40 to 46 wherein the spiral channel is adapted to induce a spiral flow in the fluid exiting the outlet.
48. An apparatus according to any one of clauses 40 to 47 wherein the spiral channel is adapted to increase the velocity of the fluid exiting the outlet as compared to a velocity of the fluid entering the inlet.
49. An apparatus according to any one of clauses 31 to 48 further comprising a flow restrictor located at the outlet for controlling an outlet velocity of the fluid.
50. An apparatus according to clause 49 wherein the flow restrictor is biased to provide control of the outlet velocity of the fluid and/or to control a fluid pressure at the outlet dependent upon fluid pressure acting on the flow restrictor.
51. An apparatus according to clause 50 wherein the bias of the flow restrictor is adapted automatically to control the outlet velocity of the fluid within a desired range.
52. An apparatus according to clause 49 or clause 50 further comprising an actuator for controlling the position of the flow restrictor thereby to control the outlet velocity of the fluid within a desired range.
53. An apparatus according to any one of clauses 31 to 52 wherein the fluid conduit extends upwardly out of the vortex chamber.
54. An apparatus according to clause 53 wherein the fluid conduit has a width which is from 10 to 40%, optionally from 20 to 30%, further optionally about 25%, of a width of the vortex chamber.
55. An apparatus according to any one of clauses 31 to 54 further comprising a conical element at a lower end of the vortex chamber, the conical element having an upper tip, a lower edge, and a conical surface progressively increasing in radius in a direction extending from the tip to the lower edge, the lower edge being received in a diffuser pipe extending downwardly from the vortex chamber towards the first collector.
56. An apparatus according to clause 55 wherein the lower edge has a larger diameter than a width of the vortex chamber and in the vicinity of the lower edge the diffuser pipe has a larger width than the diameter of the lower edge to provide an annular flow path for solid particles downwardly past the conical element from the vortex chamber towards the first collector.
57. An apparatus according to clause 55 or clause 56 wherein a distance between the upper tip and a lower end of the fluid conduit is from 0.5 to 1.5 times, optionally about 1 times, a width of the fluid conduit.
58. An apparatus according to any one of clauses 55 to 57 wherein the first collector is a bucket and a pipe element extends from the diffuser pipe into the bucket through a hole at a top of the bucket.
59. An apparatus according to any one of clauses 31 to 58 further comprising a weighing device for weighing an amount of solid particles collected in the first collector.
60. An apparatus according to clause 52 further comprising a pressure sensor for measuring internal fluid pressure in the vicinity of the first collector and a controller for compensating the weight measured by the weighing device based on variations in the internal fluid pressure measured by the pressure sensor.
61. An apparatus according to clause 59 or clause 60 wherein the first collector is supported by, or selectively engageable by, the weighing device so as to have substantially unrestricted vertical movement when supported by or engaged by the on the weighing device.
62. An apparatus according to clause 61 wherein the first collector is coupled to a solids removal pipe by a first flexible connector.
63. An apparatus according to clause 62 wherein the first collector is coupled to a liquid flushing pipe by a second flexible connector.
64. An oil or gas production facility incorporating the apparatus of any foregoing clause.
65. A method of separating solid particles from a hydrocarbon-containing fluid produced from an oil and/or gas production facility, the method comprising the steps of: (i) introducing a flow of a mixture of solid particles in a hydrocarbon-containing fluid as a spiral flow into a vortex chamber; (ii) collecting solid particles beneath the vortex chamber in a first collector; and (iii) conveying fluid away from the vortex chamber.
66. A method according to clause 65 wherein the spiral flow is generated in a spiral channel located above the vortex chamber, the spiral channel having an inlet and an outlet, a cross-sectional area of the inlet being larger than a cross-sectional area of the outlet, wherein the spiral channel increases the velocity of the fluid exiting the outlet as compared to a velocity of the fluid entering the inlet.
67. A method according to clause 56 wherein the outlet has a cross-sectional area from 10 to 40%, optionally from 20 to 30%, further optionally about 25%, less than the cross-sectional area of the inlet.
68. A method according to clause 66 or clause 67 wherein the spiral channel extends over a rotational angle of from 200 to 300 degrees, optionally from 235 to 270 degrees.
69. A method according to any one of clauses 66 to 68 wherein the spiral channel has an axis and the inlet is further from the axis than the outlet to produce a radially inwardly directed spiral flow.
70. A method according to any one of clauses 65 to 69 further comprising the step of controlling an outlet velocity of the fluid of the spiral flow using a flow restrictor.
71. A method according to clause 70 wherein the flow restrictor is biased to provide control of the outlet velocity of the fluid and/or to control a fluid pressure at the outlet dependent upon fluid pressure acting on the flow restrictor.
72. A method according to clause 71 wherein the bias of the flow restrictor automatically controls the outlet velocity of the fluid within a desired range.
73. A method according to clause 70 or clause 71 wherein the position of the flow restrictor is controlled by an actuator thereby to control the outlet velocity of the fluid within a desired range.
74. A method according to any one of clauses 65 to 73 wherein the fluid is conveyed upwardly out of the vortex chamber.
75. A method according to any one of clauses 65 to 74 wherein a conical element is disposed at a lower end of the vortex chamber, the conical element having an upper tip, a lower edge, and a conical surface progressively increasing in radius in a direction extending from the tip to the lower edge, the lower edge being received in a diffuser pipe extending downwardly from the vortex chamber towards the first collector.
76. A method according to clause 75 wherein the lower edge has a larger diameter than a width of the vortex chamber and in the vicinity of the lower edge the diffuser pipe has a larger width than the diameter of the lower edge to provide an annular flow path for solid particles downwardly past the conical element from the vortex chamber towards the collector.
77. A method according to any one of clauses 65 to 76 wherein the solid particles are collected in a bucket disposed beneath the vortex chamber.
78. A method according to any one of clauses 65 to 77 further comprising continuously or intermittently weighing an amount of solid particles collected in the first collector.
79. A method according to clause 78 further comprising measuring internal fluid pressure in the vicinity of the first collector and compensating the weight measured by the weighing device based on variations in the measured internal fluid pressure.
80. A method according to clause 78 or clause 79 further comprising determining from the weighed amount of solid particles a variation of the solid particle content of the hydrocarbon-containing fluid with respect to time and/or with respect to different production wells.
81. A method according to any one of clauses 65 to 80 further comprising conveying a fluidised flow of solid particles from a lower portion of the collector to a solids washing unit connected to the first collector.
82. A method according to clause 81 wherein fluid is conveyed into the lower portion of the first collector from the solids washing unit to form the fluidised flow.
83. A method according to clause 81 or clause 82 wherein the fluidised flow is conveyed to a particle separator for separating solid particles from the fluid, the solid particles from the particle separator being received in a second collector.
84. A method according to clause 83 further comprising cleaning the fluid separated from solids by the particle separator by separating, optionally centrifugally separating, oil and an aqueous fluid or water.
85. A method according to clause 84 further comprising returning aqueous fluid or water from the cleaning step to the first collector or the second collector.
86. A method according to any one of clauses 81 to 85 wherein the solids washing unit is connected to a plurality of separation units, each separation unit including a respective first collector, and the solids washing unit receives solid particles from the respective first collectors simultaneously or sequentially.
87. A method according to any one of clauses 65 to 86 wherein the oil and/or gas production facility comprises a plurality of production wells coupled to an outlet manifold for delivering the hydrocarbon-containing output of the production wells to a downstream processing facility, and each of the production wells is selectively connectable by a respective valve mechanism either to an input for the vortex chamber or to the outlet manifold.
88. A method according to clause 87 wherein the respective valve mechanism is controlled to direct the hydrocarbon-containing output of at least one of the production wells to the input for the vortex chamber either periodically or when solid particles above a particular threshold amount are detected in the respective hydrocarbon-containing output of the at least one production well.
89. A method of separating solid particles from a hydrocarbon-containing fluid produced from an oil and/or gas production facility, the method comprising the steps of: (i) in an upstream particle separation unit separating solid particles and fluid in a vortex chamber, the upstream particle separation unit receiving an input of a fluid and particle mixture into the vortex chamber; (ii) in a first collector collecting solid particles beneath the vortex chamber; (iii) conveying fluid away from the vortex chamber: (iv) conveying a fluidising fluid into a lower portion of the first collector; (v) forming a fluidised flow of solid particles in the fluidising fluid in the lower portion of the first collector and conveying the fluidised flow to a downstream particle separation unit; (vi) separating solid particles from the fluidising fluid in the downstream particle separation unit, and (vii) receiving the solid particles from the downstream particle separation unit in a second collector, wherein the upstream particle separation unit is adapted to separate a fluid and particle mixture at a higher pressure than a pressure of the fluidised flow separated by the downstream particle separation unit.
90. A method according to clause 89 further comprising the step of cleaning the separated fluid from the downstream particle separation unit by separating, optionally centrifugally separating, oil and an aqueous fluid or water.
91. A method according to clause 90 further comprising returning aqueous fluid or water from the cleaning step to the first collector or the second collector.
92. A method according to clause 91 wherein aqueous fluid or water is returned from the cleaning step to the first collector to provide the fluidising fluid.
93. A method according to clause 91 or clause 92 wherein aqueous fluid or water is returned from the cleaning step to the second collector to wash the solids in the second collector in a recycling step, the aqueous fluid or water flowing solids in the second collector back to the downstream particle separation unit.
94. A method according to any one of clauses 91 to 93 wherein aqueous fluid or water is returned from the cleaning step to the second collector to flush the solids out of the second collector in a solids disposal step, the aqueous fluid or water flowing solids in the second collector to a disposal site remote from the downstream particle separation unit.
95. A method according to any one of clauses 89 to 94 wherein a plurality of upstream particle separation units is provided and the downstream particle separation unit is connected to the plurality of upstream particle separation units and receives solid particles from the respective first collectors simultaneously or sequentially.
96. A method according to any one of clauses 89 to 95 further comprising continuously or intermittently weighing an amount of solid particles collected in the first collector.
97. A method according to clause 96 further comprising measuring internal fluid pressure in the vicinity of the first collector and compensating the weight measured by the weighing device based on variations in the measured internal fluid pressure.
98. A method according to clause 96 or clause 97 further comprising determining from the weighed amount of solid particles a variation of the solid particle content of the hydrocarbon-containing fluid with respect to time and/or with respect to different production wells.
99. A method according to any one of clauses 89 to 98 further comprising conveying solid particles in the fluidised flow from the first collector to the downstream particle separation unit when an amount of solid particles collected in the first collector reaches a particular threshold.
100. A method according to any one of clauses 89 to 99 wherein the oil and/or gas production facility comprises a plurality of production wells coupled to an outlet manifold for delivering the hydrocarbon-containing output of the production wells to a downstream processing facility, and each of the production wells is selectively connectable by a respective valve mechanism either to an input for the upstream particle separation unit or to the outlet manifold.
101. A method according to clause 100 wherein the respective valve mechanism is controlled to direct the hydrocarbon-containing output of at least one of the production wells to the input for the upstream particle separation unit either periodically or when solid particles above a particular threshold amount are detected in the respective hydrocarbon-containing output of the at least one production well.

## Claims

1. An apparatus for separating solid particles from a hydrocarbon-containing fluid produced from an oil and/or gas production facility, the apparatus comprising an upstream particle separation unit for separating solid particles and fluid in a vortex chamber, the upstream particle separation unit comprising an input conduit for a fluid and particle mixture into a vortex chamber, a first collector for solid particles beneath the vortex chamber and a fluid conduit for conveying fluid away from the vortex chamber, and a downstream particle separation unit comprising a first conduit for conveying a fluidising fluid into a lower portion of the first collector, a second conduit for receiving a fluidised flow of solid particles in the fluidising fluid from the lower portion of the first collector and a particle separator for receiving the fluidised flow and separating solid particles from the fluid.

2. An apparatus according to claim 1 wherein the downstream particle separation unit comprises a second collector for receiving the solid particles from the particle separator, optionally wherein the second collector is a sand tank.

3. An apparatus according to claim 1 or claim 2 wherein the upstream particle separation unit is adapted to separate a fluid and particle mixture at a higher pressure than a pressure of the fluidised flow separated by the downstream particle separation unit.

4. An apparatus according to any one of claims 1 to 3 further comprising a pump which is located downstream, in the direction of fluid flow, from an outlet of the particle separator.

5. An apparatus according to any one of claims 1 to 4 wherein the fluid conduit extends upwardly out of the vortex chamber, optionally wherein the fluid conduit has a width which is from 10 to 40%, optionally from 20 to 30%, further optionally about 25%, of a width of the vortex chamber.

6. An apparatus according to any one of claims 1 to 5 wherein the first collector is a bucket disposed beneath the vortex chamber.

7. An apparatus according to any one of claims 1 to 6 further comprising a weighing device for weighing an amount of solid particles collected in the first collector, wherein the apparatus optionally further comprises a pressure sensor for measuring internal fluid pressure in the vicinity of the first collector and a controller for compensating the weight measured by the weighing device based on variations in the internal fluid pressure measured by the pressure sensor.

8. An apparatus according to claim 7 wherein the first collector is supported by, or selectively engageable by, the weighing device so as to have substantially unrestricted vertical movement when supported by or engaged by the weighing device, optionally wherein the first collector is coupled to a solids removal pipe by a first flexible connector and/or the first collector is coupled to a liquid flushing pipe by a second flexible connector.

9. A method of separating solid particles from a hydrocarbon-containing fluid produced from an oil and/or gas production facility, the method comprising the steps of: (i) in an upstream particle separation unit separating solid particles and fluid in a vortex chamber, the upstream particle separation unit receiving an input of a fluid and particle mixture into the vortex chamber; (ii) in a first collector collecting solid particles beneath the vortex chamber; (iii) conveying fluid away from the vortex chamber: (iv) conveying a fluidising fluid into a lower portion of the first collector; (v) forming a fluidised flow of solid particles in the fluidising fluid in the lower portion of the first collector and conveying the fluidised flow to a downstream particle separation unit; and (vi) separating solid particles from the fluidising fluid in the downstream particle separation unit.

10. A method according to claim 9 wherein the solid particles from the downstream particle separation unit are received in a second collector, optionally wherein the second collector is a sand tank.

11. A method according to claim 9 or claim 10 wherein the first collector is a bucket disposed beneath the vortex chamber.

12. A method according to any one of claims 9 to 11 wherein the input of the fluid and particle mixture is a flow of a mixture of solid particles in a hydrocarbon-containing fluid as a spiral flow into the vortex chamber and/or wherein the fluid is conveyed upwardly out of the vortex chamber.

13. A method according to any one of claims 9 to 12 wherein the upstream particle separation unit separates a fluid and particle mixture at a higher pressure than a pressure of the fluidised flow separated by the downstream particle separation unit.

14. A method according to any one of claims 9 to 13 further comprising (a) continuously or intermittently weighing an amount of solid particles collected in the first collector, the method optionally further comprising measuring internal fluid pressure in the vicinity of the first collector and compensating the weight measured by the weighing device based on variations in the measured internal fluid pressure, and/or (b) conveying solid particles in the fluidised flow from the first collector to the downstream particle separation unit when an amount of solid particles collected in the first collector reaches a particular threshold.

15. A method according to claim 14 further comprising determining from the weighed amount of solid particles a variation of the solid particle content of the hydrocarbon-containing fluid with respect to time and/or with respect to different production wells.
